# EUROPÄISCHE PATENTSCHRIFT

(11) **EP 3 685 065 B1**
(45) Veröffentlichungstag und Bekanntmachung des Hinweises auf die Patenterteilung: **10.11.2021**
(21) Anmeldenummer: 18778401.2
(22) Anmeldetag: 18.09.2018
(51) Int. Cl.: F16D 65/092, F16D 69/04

(54) **BREMSBELAG FÜR EINE SCHEIBENBREMSE**
BRAKE PAD FOR A DISK BRAKE
GARNITURE DE FREIN POUR UN FREIN À DISQUE

(30) Priorität: 21.09.2017 DE 102017121879
(43) Veröffentlichungstag der Anmeldung: 29.07.2020
(73) Patentinhaber: KNORR-BREMSE Systeme für Schienenfahrzeuge GmbH, 80809 München (DE)
(72) Erfinder: MOSBACH, Christian, 82239 Alling (DE); HÄMMERL, Bernhard, 82216 Maisach (DE); LANGWADT, Marco, 80992 München (DE)
(86) Internationale Anmeldenummer: PCT/EP2018/075133
(87) Internationale Veröffentlichungsnummer: WO 2019/057684

(56) Entgegenhaltungen:
- EP-A1- 2 023 000
- CN-A- 103 629 273
- DE-A1-102016 100 454
- DE-U1-202011 001 991

## Beschreibung

Die Erfindung betrifft einen Bremsbelag für eine Scheibenbremse eines Fahrzeuges, insbesondere eines Schienenfahrzeuges, nach dem Oberbegriff des Anspruchs 1.

Vor allem bei Schienenfahrzeugen, die hohe Geschwindigkeiten erreichen, kommen Bremsbeläge zum Einsatz, deren Reibelemente aus einem harten Werkstoff bestehen.

Um ein befriedigendes Tragbild, d. h. eine gleichmäßige Flächenpressung der Reibelemente an der Reibfläche der Bremsscheibe zu erreichen, ist ein sogenannter Flexpad-Bremsbelag bekannt.

Dabei sind Reibelemente von Reibeinheiten im Kontaktbereich mit der Trägerplatte mit kugelabschnittförmigen Ansätzen versehen, die in daran angepassten kalottenförmigen Aufnahmen einliegen, so dass die Reibelemente kippbeweglich sind.

Der Begriff "kippbeweglich" bezeichnet dabei eine relative Verkippung zwischen der Bremsscheibe der Scheibenbremse und der Oberfläche des Bremsbelages. Beim Bremsvorgang sind diese beiden Oberflächen idealerweise parallel ausgerichtet, so dass eine Verkippung zu einer nichtparallelen Ausrichtung des Bremsbelages und der Scheibe der Scheibenbremse führt.

Das besonders gute thermische Tragbild des Bremsbelages beruht auf der Beweglichkeit der in der bekannten Konstruktion mehreren Reibelementen, die dadurch auf der Bremsscheibe vorhandenen Unebenheiten folgen können.

Durch diese Lagerung erfolgt eine Verschiebung der Reibelemente nahezu ohne Veränderung des Anpressdrucks, der in allen Reibelementen im Wesentlichen gleich ist. In der Folge wird ein homogenes Tragbild erzeugt und lokale Hitzeflecken auf der Bremsscheibe werden vermieden.

Wie erwähnt wird der Flexpad -Bremsbelag aufgrund seiner hohen Leistungsfähigkeit vorwiegend für Züge im hohen Geschwindigkeitsbereich eingesetzt, wobei allerdings bei einer Abbremsung eine sehr starke Erwärmung des gesamten Bremsbelages erfolgt.

Ein gattungsgemäßer Bremsbelag ist in der DE 10 2016 100 454 A1 offenbart. Bei diesem Bremsbelag sind eine Vielzahl von Reibeinheiten jeweils mittels eines Sicherungselementes an der Trägerplatte befestigt, wobei jede Reibeinheit ein Reibelement sowie eine Feder in Form einer Tellerfeder, aufweist, mit der das Reibelement federbelastet ist.

Weiter weist das Reibelement auf seiner der Trägerplatte zugewandten Seite den kugelabschnittförmigen Ansatz auf, der eine Kippbeweglichkeit ermöglicht und der sich an einer durch die Innenkontur der Tellerfeder gebildeten Kante abstützt.

Die Feder dient zum axialen Versatz des Reibelementes und ermöglicht kinematisch sowie zusätzlich aufgrund der Elastizität ein Verkippen des Reibelementes.

Dieser bekannte Bremsbelag hat sich in der Praxis durchaus bewährt und erfüllt hinsichtlich seiner Bremswirkung bzw. -leistung die gestellten Anforderungen im vorgegebenen Umfang.

Allerdings kann sich bei hoher thermischer und mechanischer Überlastung eine Minderung der Flexibilität der jeweiligen Reibeinheit einstellen, wobei die Ursachen hierfür eine Temperatur-Zeit-bedingte Relaxation der Feder und/oder ein mechanischer Verschleiß an der Kontaktstelle zwischen der Feder und dem Reibelement sind.

Überdies kann die unmittelbare Anlage des kugelabschnittsförmigen Ansatzes des Reibelementes an der Innenkante der Tellerfeder die Kippbeweglichkeit sowie einen axialen Versatz des Reibelementes behindern und überdies unter Umständen zu einem erhöhten Verschleiß des Ansatzes führen, was naturgemäß die Standzeit der Reibeinheit insgesamt, vor allem jedoch des Reibelementes nachteilig beeinflusst.

Aus der DE 20 2011 001 991 U1 ist ein gattungsgemäßer Bremsbelag bekannt, bei dem zur Wärmeabschirmung gegenüber der Trägerplatte jedes der Reibelemente auf seiner der Trägerplatte zugewandten Rückseite mit einem Paket aus mehreren Zwischenlagen versehen ist.

Aus der EP 2 023 000 A1 ist ein weiterer gattungsgemäßer Bremsbelag bekannt, bei dem zur Wärmeabschirmung zwischen der Trägerplatte und den Reibelementen eine der Fläche der Trägerplatte entsprechende Platte angeordnet ist. Die Platte wird dabei durch eine Tellerfeder an eine Teilfläche der Reibelemente angedrückt. Dazu weist die Platte Ausnehmungen auf, durch die ein zur Trägerplatte vorstehender Innenring der Reibelemente vorsteht.

Der Erfindung liegt die Aufgabe zugrunde, einen Bremsbelag der gattungsgemäßen Art so weiterzuentwickeln, dass die insbesondere thermische und mechanische Belastung der jeweiligen Reibeinheit reduziert und die Standzeit des Bremsbelages insgesamt erhöht wird.

Diese Aufgabe wird durch einen Bremsbelag mit den Merkmalen des Anspruchs 1 gelöst.

Durch die erfindungsgemäße Ausgestaltung des Bremsbelages, wonach zwischen der Feder, insbesondere der Tellerfeder, und dem Reibelement eine ringförmige Scheibe als Zwischenschicht angeordnet ist, bei der der radiale Randbereich der Scheibe sowohl zur Feder wie auch zum Reibelement abständig angeordnet ist, ergeben sich eine ganze Reihe von Vorteilen, die zu einer deutlichen Reduzierung der Betriebskosten sowie einer Erhöhung der thermischen Dauerbelastbarkeit beitragen.

So wirkt die ringförmige Scheibe im Sinne eines Hitzeschutzes für die Feder, wodurch die Gefahr der zum Stand der Technik beschriebenen temperaturbedingten Relaxation minimiert wird.

Durch die abständige Anordnung ergibt sich eine Luft-Isolierschicht, die gleichfalls zu einem reduzierten Wärmeübertrag auf die Feder führt.

Vorzugsweise ist die Scheibe in ihrem Flächenabmaß so dimensioniert, dass sie die Feder im Wesentlichen überdeckt.

Die Scheibe weist eine konzentrische kalottenförmige Vertiefung auf, in der der kugelabschnittsförmige Ansatz des Reibelementes einliegt.

Damit ist eine Gleitlagerung geschaffen, die die Flexibilität des Reibelementes deutlich verbessert, insbesondere hinsichtlich eines Verkippens um den Drehmittelpunkt und eines axialen Versatzes.

Durch den sich gleichfalls ergebenden großflächigen Kontakt zwischen dem Reibelement und der kalottenförmigen Vertiefung der ringförmigen Scheibe wird der Verschleiß des kugelabschnittsförmigen Ansatzes vermieden, zumindest jedoch stark reduziert.

Die erwähnte geringere Wärmebeaufschlagung der Feder durch die Scheibe wird, nach einem weiteren Gedanken der Erfindung, unterstützt durch eine geeignete Werkstoffwahl der Scheibe.

Hier ist ein austenitischer, rostfreier Federstahl mit einer Wärmeleitfähigkeit von 15 W/mK und einer hohen Zugfestigkeit von etwa 800 - 1200 MPa, vorzugsweise 1000 MPa. erste Wahl, womit die bei einer Bremsung anfallende Bremsenergie nur zu einem geringen, unschädlichen Teil auf die wärmeempfindlichen Bauteile, vor allem auf die Feder, einwirkt.

Weiter kann die Scheibe so ausgebildet sein, dass sie im Wesentlichen nur in den durch die Außenflächen der kalottenförmigen Vertiefung definierten Bereichen einerseits an dem kugelabschnittsförmigen Abschnitt des Reibelementes und andererseits an der Innenkonturkante der Feder anliegt. Der sich anschließende radiale planebene Bereich der Scheibe ist sowohl zur Feder wie auch zum Reibelement abständig angeordnet, wodurch sich die Luft-Isolierschicht ergibt, die gleichfalls zu einem reduzierten Wärmeübertrag auf die Feder führt.

Insgesamt ergibt sich, dass die Flexibilität der Reibelemente, die die wichtigste Grundbedingung für die Funktionseigenschaften des sogenannten flexiblen Bremsbelages ist, über die Lebensdauer vorteilhaft beeinflusst wird.

Darüber hinaus wird durch die sozusagen Kalottenlagerung, die sich aus der kalottenförmigen Vertiefung der ringförmigen Scheibe in Korrespondenz mit dem kugelabschnittsförmigen Ansatz des Reibelementes ergibt, die Beweglichkeit der einzelnen Reibelemente deutlich verbessert, was zu einer Maximierung der Funktionseigenschaften des Bremsbelages führt.

Durch die Ausgestaltung der kalottenförmigen Vertiefung der Scheibe kann das Axialbewegungsspiel zwischen dem Reibelement und der Trägerplatte begrenzt eingestellt werden, was ebenfalls zu einer Funktionsoptimierung beiträgt.

Hervorzuheben ist überdies, dass die Erfindung mit geringem konstruktiven und fertigungstechnischen Aufwand realisierbar ist, da die ringförmige Scheibe aus einem einfachen Blechformteil, vorzugsweise einer Ronde, hergestellt werden kann und zwar durch Stanzen und Umformen.

Weitere vorteilhafte Ausbildungen der Erfindung sind in den Unteransprüchen gekennzeichnet.

Ein Ausführungsbeispiel der Erfindung wird nachfolgend anhand der beigefügten Zeichnungen beschrieben.

Es zeigen:
- Fig. 1: einen Bremsbelag in einer perspektivischen Rückansicht
- Fig. 2: den Bremsbelag in einer perspektivischen Vorderansicht
- Fig. 3: einen Schnitt durch den Bremsbelag gemäß der Linie III-III in Fig. 1
- Fig. 4: eine Einzelheit des Bremsbelages in einer perspektivischen Ansicht.

In der nachfolgenden Figurenbeschreibung beziehen sich Begriffe wie oben, unten, links, rechts, vorne, hinten usw. ausschließlich auf die in den jeweiligen Figuren gewählte beispielhafte Darstellung und Position des Bremsbelags, der Scheibenbremse, der Trägerplatte, des Sicherungselements und dergleichen. Diese Begriffe sind nicht einschränkend zu verstehen, d.h., durch verschiedene Arbeitsstellungen oder die spiegelsymmetrische Auslegung oder dergleichen können sich diese Bezüge ändern.

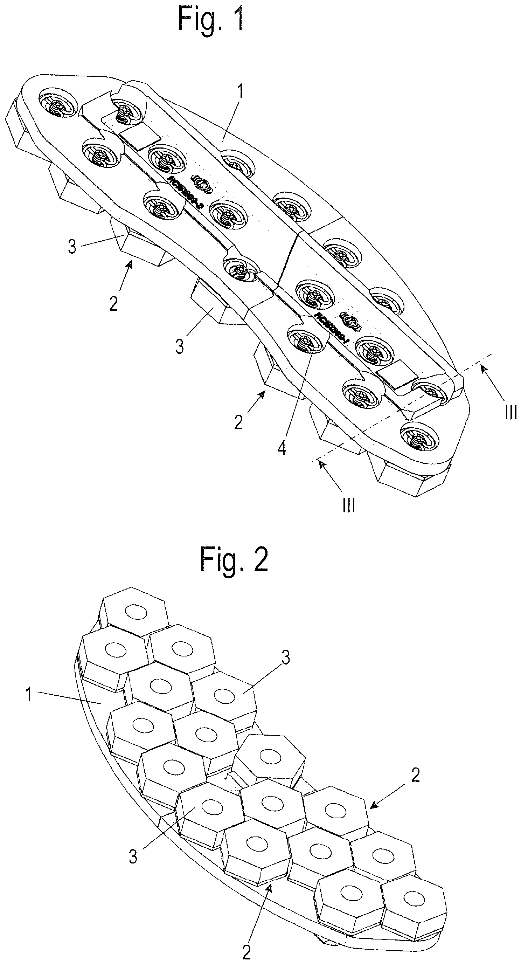

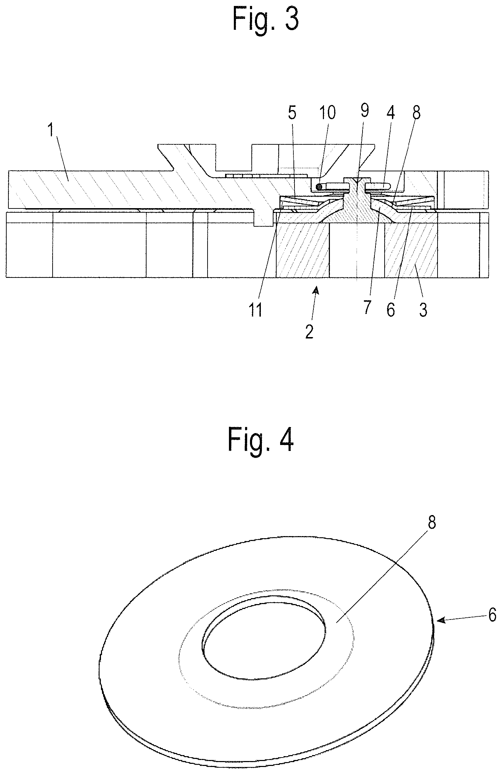

In den **Fig. 1 und 2** ist ein Bremsbelag für eine Scheibenbremse, insbesondere eines Schienenfahrzeuges dargestellt, mit mehreren, an einer Trägerplatte 1 angeschlossenen Reibeinheiten 2, von denen eine in der **Fig. 3** als Einzelheit im Schnitt dargestellt ist.

Jede Reibeinheit 2 ist mit einem Sicherungselement 4 in Form einer Bügelfeder rückseitig an der Trägerplatte 1 gehalten, wozu ein Reibelement 3 der Reibeinheit 2 einen Zapfen 9 aufweist, der die Trägerplatte 1 durchtritt und an der das Sicherungselement 4, das in einer Ausnehmung 10 der Trägerplatte 1 einliegt, befestigt ist.

Neben dem Reibelement 3 weist die Reibeinheit 2 eine Feder 5 in Form einer zum Reibelement 3 hin gewölbten Tellerfeder auf, die sich in einer sackartigen Aussparung 11 der Trägerplatte 1 abstützt, wobei die Aussparung 11 auf der Ausnehmung 10 gegenüberliegenden Seite der Trägerplatte 1 vorgesehen ist. Zwischen dem Reibelement 3 und der Feder 5 ist, gemäß der Erfindung, eine ringförmige Scheibe 6 angeordnet, die als Einzelheit in der **Fig. 4** erkennbar ist.

Die ringförmige Scheibe 6 liegt dabei zumindest bereichsweise an der Feder 5 und dem Reibelement 3 an. Die Scheibe 6 und die Feder 5 sind dabei in der Aussparung 11 der Trägerplatte 1 angeordnet.

Konzentrisch ist die Scheibe 6 mit einer kalottenartigen Vertiefung 8 versehen, in der ein kugelabschnittsförmiger Ansatz 7 des Reibelementes 3 einliegt, das dadurch kippbeweglich gegenüber der Scheibe 6 gelagert ist.

Die kalottenförmige Vertiefung 8 ragt in eine Mittelöffnung der Feder 5 und stützt sich an der die Mittenöffnung begrenzenden Kante ab. Damit ist eine Zentrierung sowohl des Reibelementes 3 wie auch der Scheibe 6 erreicht.

An die kalottenförmige Vertiefung 8 der Scheibe 6 schließt sich radial ein umfänglicher hier als Flansch ausgebildeter Randbereich an, der abständig sowohl zum Reibelement 3 wie auch zur Feder 5 verläuft, unter Ausbildung jeweils eines eine Luftisolierschicht bildenden Spaltes.

Erkennbar ist der Außendurchmesser der Scheibe 6 so bemessen, dass diese sowohl die Feder 5 wie auch das Reibelement 3 im Wesentlichen überdeckt.

Die Scheibe 6 besteht dabei bevorzugt aus einem austenitischen, rostfreien Federstahl mit einer Wärmeleitfähigkeit von etwa 15 W/mK und einer Zugfestigkeit von etwa 800 -1200 MPa, vorzugsweise etwa 1000 MPa.

### BEZUGSZEICHENLISTE

- 1: Trägerplatte
- 2: Reibeinheit
- 3: Reibelement
- 4: Sicherungselement
- 5: Feder
- 6: Scheibe
- 7: kugelabschnittsförmiger Ansatz
- 8: Vertiefung
- 9: Zapfen
- 10: Ausnehmung
- 11: Aussparung

## Patentansprüche

1. Bremsbelag für eine Scheibenbremse eines Fahrzeuges, insbesondere eines Schienenfahrzeuges, mit einer Trägerplatte (1), an der mehrere Reibeinheiten (2) jeweils mittels eines an der den Reibeinheiten (2) abgewandten Rückseite der Trägerplatte (1) sich abstützenden Sicherungselementes (4) befestigt sind, wobei die jeweilige Reibeinheit (2) auf der dem Sicherungselement (4) abgewandten Seite der Trägerplatte (1) ein mittels eines kugelabschnittsförmigen Ansatzes (7) kippbeweglich und durch eine sich an der Trägerplatte (1) abstützende Feder (5) belastet gelagertes Reibelement (3) aufweist, wobei zwischen der Feder (5) und dem Reibelement (3) eine ringförmige Scheibe (6) angeordnet ist, die zumindest bereichsweise an der Feder (5) und dem Reibelement (3) anliegt, wobei die Scheibe (6) eine konzentrische, kalottenförmige Vertiefung (8) aufweist, an die ein radialer Randbereich anschließt, und in der Vertiefung der kugelabschnittsförmige Ansatz (7) des Reibelementes (3) einliegt,
**dadurch gekennzeichnet, dass**
der radiale Randbereich der Scheibe (6) abständig zur Feder (5) und zum Reibelement (3) verläuft.

2. Bremsbelag nach Anspruch 1,
**dadurch gekennzeichnet, dass**
eine dem kugelabschnittsförmigen Ansatz (7) abgewandte Außenseite der kalottenförmigen Vertiefung (8) an einer eine Mittenöffnung der Feder (5) begrenzenden Kante anliegt, wobei die Feder (5) als Tellerfeder ausgebildet ist, mit einer zum Reibelement (3) hin gerichteten Wölbung.

3. Bremsbelag nach einem der vorhergehenden Ansprüche,
**dadurch gekennzeichnet, dass**
die Scheibe (6) in ihrem Außenmaß so bemessen ist, dass sie die Feder (5) und das Reibelement (3) weitgehend überdeckt.

4. Bremsbelag nach einem der vorhergehenden Ansprüche,
**dadurch gekennzeichnet, dass**
die Scheibe (6) aus einem austenitischen, rostfreien Federstahl mit einer Wärmeleitfähigkeit von etwa 15 W/mK und einer Zugfestigkeit von etwa 800 - 1200 MPa, vorzugsweise etwa 1000 MPa besteht.

5. Bremsbelag nach einem der vorhergehenden Ansprüche,
**dadurch gekennzeichnet, dass**
die Scheibe (6) und die Feder (5) in einer Aussparung (11) der Trägerplatte (1) angeordnet sind.

## Claims

1. Brake pad for a disk brake of a vehicle, in particular a rail vehicle, with a carrier plate (1) to which a plurality of friction units (2) are fixed, each of them attached by means of a securing element (4) supported on the rear side of the carrier plate (1) that faces away from the friction units (2), wherein in each case, on the side of the carrier plate (1) that faces away from the securing element (4), the respective friction unit (2) has a friction element (3) which is mounted so that it can tilt by virtue of a spherical-section-shaped attachment (7) and is loaded by a spring (5) supported against the carrier plate (1), wherein an annular disk (6) is arranged between the said spring (5) and the said friction element (3), which disk is at least partially in contact with the spring (5) and the friction element (3), the said disk (6) having a concentric, cap-shaped depression (8) bounded by a radial edge area, such that the spherical-section-shaped attachment (7) of the friction element (3) rests in the said depression,
**characterised in that**
the radial edge area of the disk (6) extends at a distance from the spring and from the friction element (3).

2. Brake pad according to Claim 1,
**characterised in that**
an outside of the cap-shaped depression (8) that faces away from the spherical-section-shaped attachment (7) is in contact with an edge that delimits a central aperture of the spring (5), the spring (5) being in the form of a cup spring with a curvature directed toward the friction element (3).

3. Brake pad according to either of the preceding claims,
**characterised in that**
the external dimensions of the disk (6) are such that it largely covers the spring (5) and the friction element (3).

4. Brake pad according to any of the preceding claims,
**characterised in that**
the disk (6) consists of an austenitic stainless spring steel with a thermal conductivity of around 15 W/mK and a tensile strength of around 800 to 1200 MPa, preferably about 1000 MPa.

5. Brake pad according to any of the preceding claims,
**characterised in that**
the disk (6) and the spring (5) are positioned in a cut-out (11) of the carrier plate (1).

## Revendications

1. Garniture de frein d'un frein à disque d'un véhicule, notamment d'un véhicule ferroviaire, comprenant une plaque (1) de support, sur laquelle sont fixées plusieurs unités (2) de friction, chacune au moyen d'un élément (4) de fixation s'appuyant sur la face arrière, loin des unités (2) de friction, de la plaque (1) de support, dans laquelle l'unité (2) respective de friction a, sur la face, loin de l'élément (4) de fixation, de la plaque (1) de support, un élément (3) de friction monté avec possibilité de basculement au moyen d'une pièce (7) rapportée en forme de partie de sphère et soumis à l'action d'un ressort (5) s'appuyant sur la plaque (1) de support, dans laquelle, entre le ressort (5) et l'élément (3) de friction est disposé un disque (6) annulaire qui s'applique au moins par endroits au ressort (5) et à l'élément (3) de friction, dans laquelle le disque (6) a une cavité (8) concentrique en forme de calotte à laquelle se raccorde une partie de bord radiale et dans la cavité, entre la pièce (7) rapportée en forme de partie de sphère de l'élément (3) de friction,
**caractérisée en ce que**
la partie de bord radiale du disque (6) s'étend à distance du ressort (5) et de l'élément (3) de friction.

2. Garniture de frein suivant la revendication 1,
**caractérisé en ce que**
un côté extérieur, loin de la pièce (7) rapportée en forme de partie de sphère, de la cavité (8) en forme de calotte, s'applique à un bord délimitant une ouverture médiane du ressort (5), le ressort (5) étant constitué en ressort à disque en ayant une voussure dirigée vers l'élément (3) de friction.

3. Garniture de frein suivant l'une des revendications précédentes,
**caractérisé en ce que**
le disque (6) est dimensionné dans sa dimension extérieure, de manière à recouvrir dans une grande mesure le ressort (5) et l'élément (3) de friction.

4. Garniture de frein suivant l'une des revendications précédentes,
**caractérisé en ce que**
le disque (6) est en acier pour ressort inoxydable austénitique ayant une conductibilité de la chaleur d'environ 15 W/mK et une résistance à la traction d'environ 800 à 1 200 MPa, de préférence d'environ 1 000 MPa.

5. Garniture de frein suivant l'une des revendications précédentes,
**caractérisé en ce que**
le disque (6) et le ressort (5) sont disposés dans un évidement (11) de la plaque (1) de support.
